# FASCICULE DE BREVET EUROPEEN

(11) **EP 1 492 995 B1**
(45) Date de publication et mention de la délivrance du brevet: **07.01.2015**
(21) Numéro de dépôt: 03745823.9
(22) Date de dépôt: 04.04.2003
(51) Int. Cl.: G01B 11/00, G01B 11/02

(54) **REPERE DISPOSE DANS UN ENVIRONNEMENT A MESURER ET SYSTEME DE MESURE COMPRENANT CE REPERE**
IN EINER ZU MESSENDEN UMGEBUNG ANGEORDNETE REFERENZMARKE UND DIESE REFERENZMARKE EINSCHLIESSENDES MESSSYSTEM
MARK PROVIDED IN AN ENVIRONMENT TO BE MEASURED AND MEASURING SYSTEM COMPRISING SAME

(30) Priorité: 05.04.2002 FR 0204259
(43) Date de publication de la demande: 05.01.2005
(73) Titulaire: CREAFORM FRANCE, 38600 Fontaine (FR)
(72) Inventeur: VIALA, Marc, F-38760 Varces Allieres Et Risset (FR); LARUE, Jean-François, F-38500 VOIRON (FR)
(74) Mandataire: Ahner, Philippe
(86) Numéro de dépôt international: PCT/FR2003/001071
(87) Numéro de publication internationale: WO 2003/085356

(56) Documents cités:
- EP-A- 0 863 413
- WO-A-01/81858
- WO-A-99/22281

## Description

Cette invention concerne avant tout un repère, appelé ici outillage, disposé dans un environnement à mesurer pour fournir une référence géométrique, et aussi un système comprenant ce repère.

Dans de nombreuses opérations de mesure tridimensionnelle d'un environnement, on utilise des outillages permettant de matérialiser des référentiels géométriques en des points précis du volume de mesure ou de l'objet à mesurer. Ces outillages sont en général fixés à des équipements comme des cadres de montage ou à un objet à mesurer lui-même. Dans certains cas, en particulier d'un système de mesure optique, ces outillages peuvent être mobiles et manipulés par un opérateur ou un robot afin de matérialiser les référentiels en différents points et réaliser ainsi des mesures successives.

Certains outillages comprennent une ou plusieurs sphères métalliques dont la position doit être déterminée par palpage de plusieurs points sur chacune des sphères lorsque la technique utilisée pour effectuer la mesure est mécanique. D'autres outillages comprennent des cibles à prismes réfléchissants lorsque l'appareillage utilisé comprend un laser. Enfin, d'autres outillages comprennent des points lumineux matérialisés soit par des cibles rétro-réfléchissantes soit par des diodes électro-luminescentes lorsque la technique utilisée est la photogrammétrie. Plusieurs brevets illustrant de tels outillages ou des modes d'exploitation ont été déposés aux années précédentes.

Un exemple sera trouvé dans le brevet EP 0863 413 A1, et d'autres encore dans les documents WO 99/22281 A et WO 01/81858 A.

En général, l'outillage comprend donc plusieurs marques dont on exploite les positions relatives, en les corrélant à leurs directions à partir du moyen de mesure pour en déduire la position et l'orientation d'ensemble de l'outillage.

Les positions relatives des marques sont obtenues au moyen d'un étalonnage préalable de l'outillage. Ces positions, qui caractérisent chaque outillage, sont alors en général enregistrées dans un fichier informatique. Cette conception peut provoquer des erreurs car il existe souvent plusieurs outillages différents, qui peuvent être confondus. De plus, avant chaque utilisation de nouvel outillage, il faut s'assurer que le fichier est chargé dans le système de mesure. Enfin, l'utilisateur ne peut pas consulter les caractéristiques de l'objet mesuré au moyen de l'outillage sans s'adresser directement à l'ordinateur qui supervise le système de mesure.

L'outillage conforme à l'invention obvie à ces inconvénients ; il est caractérisé en ce qu'il est muni d'une étiquette électronique comprenant une mémoire chargée de renseignements décrivant les marques et de moyens de communication des renseignements à distance.

D'autres aspects de l'invention seront décrits au moyen des figures, dont :

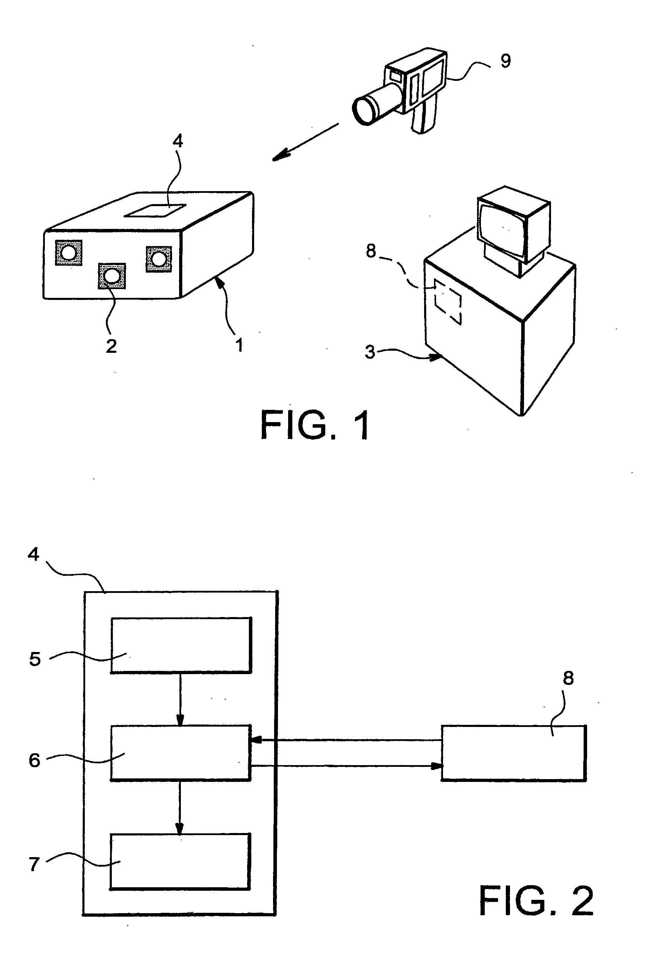

- la figure 1 est une vue générale d'un système de mesure, et
- la figure 2 illustre l'étiquette électronique utilisée et les moyens de communication.

Le dispositif conforme à l'invention permet d'associer physiquement et de façon indissociable ses paramètres géométriques à un outillage 1 porteur d'une pluralité de marques 2, qui sont ici de nature optique. Les marques peuvent être réfléchissantes ou luminescentes, ponctuelles ou au contraire formées de taches lumineuses plus larges, et elles sont en nombre suffisant pour dessiner un motif reconnaissable. Elles peuvent être semblables entre elles ou au contraire différentes. Il est associé à l'outillage 1 une étiquette électronique 4 comprenant une mémoire 5 permettant d'enregistrer des paramètres de description des marques 2 et notamment leurs coordonnées géométriques mesurées à partir d'une origine (quelconque) de l'outillage 1. L'étiquette électronique 4 comprend encore un émetteur-récepteur 6 susceptible de lire le contenu de la mémoire 5 et de le transmettre à un moyen de télécommunication 8 analogue associé à un ordinateur 3 qui supervise le système de mesure en exploitant les mesures d'une caméra 9, ou d'un autre appareil pouvant observer les marques 2. De plus, l'étiquette 4 peut être munie d'un afficheur 7 à cristaux liquides qui révèle directement les caractéristiques de l'outillage 1 sans utiliser le système de mesure et notamment sans qu'on doive revenir à l'ordinateur 3. Des informations complémentaires fournies par l'ordinateur 3, et notamment des modes opératoires ou les résultats de mesure, pourraient aussi être affichées. La transmission peut utiliser des ondes infrarouges ou radiophoniques.

Dans cette invention, la mesure commence par une lecture du contenu de la mémoire 5 par l'ordinateur 3 et les moyens 6 et 8 pour que les bonnes caractéristiques de l'outillage 1 soient employées.

L'outillage 1 est devenu ainsi un élément beaucoup plus autonome du système de mesure, ce qui est appréciable s'il doit être manipulé par un opérateur, qui peut vérifier immédiatement l'état ou l'avancement de la mesure. Un exemple d'une telle situation apparaît si l'outillage 1 est une pointe de palpage qu'on promène sur une structure dont la forme doit être mesurée.

## Revendications

1. Repère (1) disposé dans un environnement à mesurer, muni de marques (2) de référence, **caractérisé en ce qu'**il est muni d'une étiquette électronique (4) comprenant une mémoire (5) chargée de renseignements décrivant les marques (2), et des moyens de communication (6) à distance des renseignements.

2. Repère selon la revendication 1, **caractérisé en ce que** les renseignements comprennent des coordonnées des marques sur le repère (1).

3. Repère selon l'une quelconque des revendications 1 ou 2, **caractérisé en ce que** l'étiquette électronique (4) comprend aussi un afficheur (7) des renseignements.

4. Repère selon la revendication 3, **caractérisé en ce que** l'afficheur (7) est à cristaux liquides.

5. Repère selon l'une quelconque des revendications 1 à 3, **caractérisé en ce que** les marques (2) sont soit réfléchissantes soit luminescentes.

6. Repère selon l'une quelconque des revendications 1 à 4, **caractérisé en ce que** les moyens de communication (6) à distance utilisent des ondes infrarouges ou radiophoniques.

7. Système de mesure d'un environnement comprenant au moins un appareil de mesure (9) et un calculateur (3) d'exploitation des mesures, **caractérisé en ce qu'**il comprend un repère (1) selon l'une quelconque des revendications précédentes, et des moyens de communication (6) à distance dépendant du calculateur (3) et associés aux moyens de communication (6) à distance de l'étiquette électronique (4).

## Patentansprüche

1. Referenzmarkierungselement (1), das in einer zu vermessenden Umgebung angeordnet ist und mit Referenzmarkierungen (2) versehen ist, **dadurch gekennzeichnet, dass** es mit einem elektronischen Etikett (4) versehen ist, das einen Speicher (5), in den Hinweise geladen sind, die die Markierungen (2) beschreiben, und Mittel (6) für die Fernübermittlung der Hinweise enthält.

2. Referenzmarkierungselement nach Anspruch 1, **dadurch gekennzeichnet, dass** die Hinweise Koordinaten der Markierungen an dem Referenzmarkierungselement (1) umfassen.

3. Referenzmarkierungselement nach einem der Ansprüche 1 oder 2, **dadurch gekennzeichnet, dass** das elektronische Etikett (4) außerdem eine Anzeige (7) für die Hinweise umfasst.

4. Referenzmarkierungselement nach Anspruch 3, **dadurch gekennzeichnet, dass** die Anzeige (7) Flüssigkristalle enthält.

5. Referenzmarkierungselement nach einem der Ansprüche 1 bis 3, **dadurch gekennzeichnet, dass** die Markierungen (2) entweder reflektierend oder leuchtend sind.

6. Referenzmarkierungselement nach einem der Ansprüche 1 bis 4, **dadurch gekennzeichnet, dass** die Fernübermittlungsmittel (6) Infrarot- oder Funkwellen verwenden.

7. System zum Vermessen einer Umgebung, das wenigstens eine Messvorrichtung (9) und einen Computer (3) für die Auswertung der Messungen umfasst, **dadurch gekennzeichnet, dass** es ein Referenzmarkierungselement (1) nach einem der vorhergehenden Ansprüche und Fernübermittlungsmittel (6), die von dem Computer (3) abhängig sind und den Fernübermittlungsmitteln (6) des elektronischen Etiketts (4) zugeordnet sind, umfasst.

## Claims

1. Tag (1) placed in an environment to be measured having reference markers (2), **characterized in that** it includes an electronic label (4) including a memory (5) loaded with information describing the markers (2) and remote information communication means (6).

2. Tag according to claim 1, **characterized in that** the information includes coordinates of the markers on the tag (1).

3. Tag according to any one of claims 1 and 2, **characterized in that** the electronic label (4) also includes an information display (7).

4. Tag according to claim 3, **characterized in that** the display (7) uses liquid crystals.

5. Tag according to any one of claims 1 to 3, **characterized in that** the markers (2) are either reflective or luminescent.

6. Tag according to any one of claims 1 to 4, **characterized in that** the remote communication means (6) use infrared or radiophonic waves.

7. Environment measuring system having at least one measuring device (9) and a measurement operation calculator (3) **characterized in that** it includes a tag (1) according to any one of the preceding claims and remote communication means (6) that depend on the calculator (3) and that are associated with the remote communication means (6) of the electronic label (4).
